# EUROPEAN PATENT APPLICATION

(11) **EP 4 552 888 A1**
(43) Date of publication of application: **14.05.2025**
(21) Application number: 24209878.8
(22) Date of filing: 30.10.2024
(51) Int. Cl.: B60K 11/06, B60K 11/08, B60K 1/04, B60K 1/00

(54) **ELECTRIC WORK VEHICLE**

(30) Priority: 10.11.2023 JP 2023192373
(71) Applicant: Kubota Corporation, Osaka-shi, Osaka 5568601 (JP)
(72) Inventor: ONO, Kohei, Sakai-shi, Osaka 5900908 (JP); TANIMURA, Tomoaki, Sakai-shi, Osaka 5900908 (JP)
(74) Representative: Cabinet Beau de Loménie

(57) **Abstract**

An electric work vehicle includes: a body having a frame structure including a front part and a rear part, the front part providing for a power section (4), the rear part providing for a drive section (5); a battery (27) in the power section (4); an electric motor (29) for traveling configured to receive electric power from the battery (27); and a cooling fan (32). The electric motor (29) for traveling is in an air flow space (41) formed in the power section (4), and the cooling fan (32) is adjacent to an air outlet (45) formed in a front end region of the air flow space (41).

## Description

### Technical Field

The present invention relates to an electric work vehicle.

### Background Art

In an electric work vehicle as disclosed in, for example JP2021-000953A, a cooling fan is disposed in a front part of a body. A portion of cooling air from the cooling fan is directed to a battery, and another portion of the cooling air is directed to an air flow space between a body frame and the battery. The cooling fan and the battery are housed in a cover member whose front face has an inlet section for taking external air in. A side wall of the cover member facing a lateral face of the battery has an outlet section for discharging air from the inside of the cover member to the outside. In the electric work vehicle disclosed in JP2021-000953A, an intake port (inlet section) for air to be cooled by the cooling fan is in the vicinity of a discharge port (outlet section) for air blown by the cooling fan. Accordingly, there is room for improvement in the cooling performance from the viewpoint of not allowing the discharged air to be taken up again from the intake port. In addition, an inlet of cooling air is located in a front end region of the work vehicle, and thus there is room for making improvement so as not to allow the inlet to take dust or cut grass in. In view of such circumstances, the object of the present invention is to provide an electric work vehicle in which the air inlet and the air outlet of the cooling fan are appropriately arranged.

### Summary of Invention

An electric work vehicle of the present invention includes:
a body having a frame structure including a front part and a rear part, the front part providing for a power section, the rear part providing for a drive section;
a battery in the power section;
an electric motor for traveling configured to receive electric power from the battery; and
a cooling fan,
wherein the power section has an air flow space therein,
the air flow space has a length in a front-rear direction greater than a length of the battery in the front-rear direction, and includes a rear end region and a front end region,
the rear end region of the air flow space has an air inlet,
the front end region of the air flow space has an air outlet,
the electric motor for traveling is in the air flow space, and
the cooling fan is adjacent to the air outlet.

With this configuration, the air flow space is formed in a front-rear direction of the body so as to extends as long as the battery. The rear end region of the air flow space has an air inlet and the front end region of the air flow space has an air outlet, for allowing air to pass through the air flow space with use of the cooling fan. Accordingly, a distance between the air inlet and the air outlet is secured, and cooling performance can be improved by not allowing the discharged air from the air outlet to be taken up again into the air inlet. It is noted that a location "adjacent" to the air outlet includes a position where the air outlet itself is present, and the cooling fan may be directly disposed in the air outlet.

In one preferred embodiment of the present invention, the air inlet faces the drive section.

In order to secure comfortableness of the driver section, the drive section is contrived so as not to allow hot air, dust and cut grass to enter the drive section. Accordingly, the air inlet which faces the drive section is less likely to be exposed to hot air, dust or cut grass, and fresh air suitable as cooling air can be taken in.

In one preferred embodiment of the present invention, the electric work vehicle further includes a panel, wherein a rear end of the rear end region is defined by the panel, and the panel has the air inlet.

When a panel making a boundary at the rear end region of the air flow space is positioned in the drive section, the panel of the drive section is contrived so as to prevent hot air, dust and cut grass from entering the air flow space. Accordingly, it is convenient if this panel has the air inlet.

In one preferred embodiment of the present invention, the panel is provided with a grating that covers at least a part of the air inlet.

With this configuration, even when the air inlet is exposed to foreign materials, such as dust and cut grass, such foreign materials can be prevented from entering the air flow space.

In one preferred embodiment of the present invention, the electric work vehicle further comprises a steering wheel, wherein the panel is forward of and below the steering wheel.

The steering wheel is positioned in the vicinity of a driver in such a manner that the steering wheel faces the driver, and thus a surrounding part of the steering wheel is airy. In addition, the surrounding part is contrived so as to prevent hot air, dust and cut grass from staying around the surrounding part. Accordingly, when the panel having the air inlet is forward of and below the steering wheel, there is an advantage that hot air, dust and cut grass are prevented from entering the air inlet.

In one preferred embodiment of the present invention, the electric work vehicle further comprises a floor panel provided for the drive section,
wherein the air inlet is above the floor panel.

The floor panel prevents hot air, dust and cut grass from being brown up from the ground and entering the drive section. Accordingly, when the air inlet is positioned above the floor panel, hot air, dust and cut grass are also prevented from entering the air inlet.

In one preferred embodiment of the present invention, the air outlet is positioned lower than a position of the air inlet.

With this configuration, it is less likely that the cooling air heated in the air flow space and discharged from the air outlet is again taken in from the air inlet.

In one preferred embodiment of the present invention, the electric work vehicle further includes an inverter disposed in the air flow space and configured to receive electric power from the battery and supply the electric power to the electric motor for traveling.

The inverter that supplies electric power to the electric motor for traveling is also a heat generating body and requires cooling. Accordingly, with the above configuration, the cooling air from the same cooling fan can efficiently cool the battery, the electric motor for traveling, and the inverter.

The above-mentioned and other embodiments, procedures, features, and effects of the present invention will be more apparent from the following detailed description of the embodiments with reference to the drawings.

### Brief Description of Drawings

Embodiments of the present invention will be described with reference to the following drawings.
Fig. 1 is a left side view of an electric work vehicle.
Fig. 2 is a left side view of a vertical cross section of the electric work vehicle showing an arrangement of components of a power system.
Fig. 3 is a perspective view of a lower cover as seen from obliquely downward position.
Fig. 4 is a schematic diagram showing cooling air flow.

### Description of Embodiments

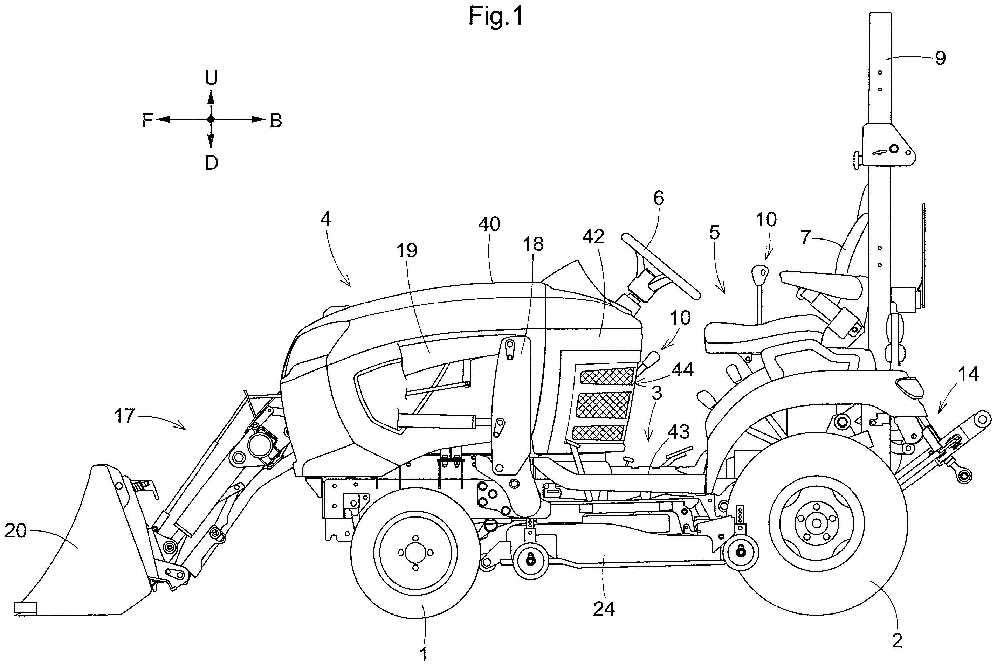

An embodiment of the electric work vehicle (hereinbelow, simply referred to as "work vehicle") according to the present invention will be described with reference to the drawings. In the following description, unless otherwise noted, an arrow U indicates the upper side of the body, an arrow D indicates the lower side of the body, an arrow F indicates the front side of the body, and an arrow B indicates the rear side of the body as shown in Figs. 1, 2 and 4. A direction orthogonal to both the arrow U and the arrow F - that is, a direction perpendicular to the plane of Figs. 1, 2 and 4 - is defined as the right-left direction.

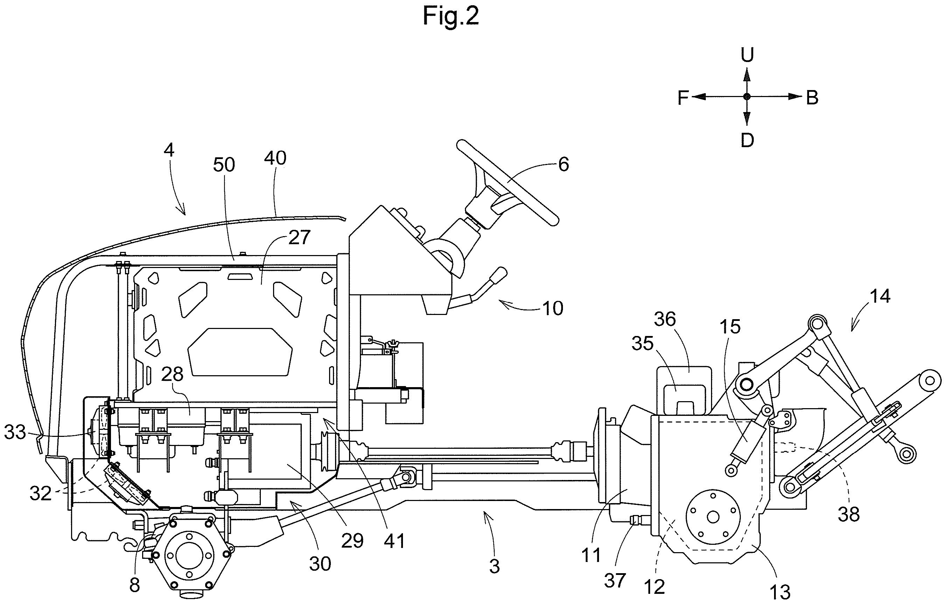

In this embodiment, the work vehicle is an electric tractor. As shown in Figs. 1 and 2, the work vehicle includes a body 3 to which right and left front wheels 1 and right and left rear wheels 2 are attached. The body 3 has a frame structure including a front part and a rear part. A bonnet (hood) 40 is in the front part, and a drive section 5 is in the rear part. In other words, the rear part of the frame structure of the body 3 provides for the drive section 5.

The drive section 5 is provided with: a steering wheel 6 for steering the front wheels 1; a driver's seat 7; and a rollover protection structure (ROPS) frame 9. The steering wheel 6 is supported by a steering column (not shown). A front panel 42 is disposed forward of and below the steering wheel 6. The steering column is covered with the front panel 42. The front panel 42 is forward of the driver's seat 7. The front panel 42 extends downward to a floor panel 43 serving as a floor face of the drive section 5. The upper portion of the front panel 42 is configured as a meter panel. On the meter panel, a speedometer and a fuel meter are arranged. In addition, operation tools 10 are provided around the front panel 42 and the driver's seat 7. The operation tools 10 include a plurality of tools manually operable by an operator for operating the travel speed of the work vehicle and for operating a work device provided for the work vehicle.

As shown in Figs. 1 and 2, in a rear part of the body 3 which rear part is below the driver's seat 7, a transmission section 12 including a continuously variable transmission 11 is provided. A front axle case 8 is provided in the front part of the body 3. The front wheels 1 are held by the front axle case 8. The rear wheels 2 are held by a transmission case 13 which houses the transmission section 12.

As shown in Fig. 2, in the front part of the body 3, a power section 4 is provided and covered with the bonnet 40. In other words, the front part of the frame structure of the body 3 provides for the power section 4. The power section 4 is provided with a battery 27, an inverter 28, an electric motor 29 for traveling, and a cooling fan 32. The cooling fan 32 includes a fan motor 33 built therein. The frame structure of the body 3 includes a pair of right and left front-rear frames. The pair of right and left front-rear frames support thereon a sub-frame structure 50 defining a cuboid space. The battery 27 is in the cuboid space of the sub-frame structure 50 and fixed to the sub-frame structure 50. As a result, the battery 27 is above the pair of right and left front-rear frames.

As shown in Figs. 1 and 2, a lifting link mechanism 14 is connected to a rear part of the transmission case 13 in such a manner that the lifting link mechanism 14 is vertically swingable. Various work devices (not shown), such as cultivator, can be attached to the lifting link mechanism 14. The work device is lifted and lowered by vertical swing operation of the lifting link mechanism 14 with use of a lifting cylinder 15. To the upper part of the transmission case 13, a hydraulic pump 35 and a hydraulic pump-motor 36 are attached. The hydraulic pump-motor 36 is configured to be driven by electric power from the battery 27 and to drive the hydraulic pump 35. The lifting cylinder 15 is configured to be lifted and lowered by a hydraulic pressure of operating fluid from the hydraulic pump 35.

In Fig. 1, a front loader 17 is attached to the front part of the body 3. The front loader 17 is an example of the work device, and the work device is not limited to the front loader 17. The front loader 17 includes a base 18, a boom 19, a bucket 20, a hydraulic actuator and the like. The operating fluid is supplied from the hydraulic pump 35 to the hydraulic actuator so that the hydraulic actuator is expanded and contracted. The boom 19 and the bucket 20 are operated by this expansion and contraction of the hydraulic actuator.

Further, in Fig. 1, a mid-mount type mower deck 24 is disposed between the front wheels 1 and the rear wheels 2 and is attached to the body 3 in such a manner that the mower deck 24 is lifted and lowered. Three rotary blades (not shown) are disposed inside the mower deck 24 and arranged in a right-left direction. The three rotary blades are rotatable about an axis extending in an upper-lower direction. Grass cut by the three rotary blades is discharged in a right direction from a discharge section (not shown) formed on a lateral side of the mower deck 24.

As shown in Fig. 2, motive power from the electric motor 29 for traveling is transmitted via a power transmission shaft to the continuously variable transmission 11. The continuously variable transmission 11 steplessly vary the power in a forward or reverse direction, and is for example a hydro-static transmission (HST).

In the transmission section 12, a sub-transmission (not shown) and a rear wheel differential (not shown) are provided. The motive power from the electric motor 29 is varied by the continuously variable transmission 11, and the varied motive power is transmitted via the sub-transmission and the rear wheel differential to the rear wheels 2. In the front axle case 8, a front wheel differential (not shown) is provided. The motive power varied by the continuously variable transmission 11 is divided immediately before the rear wheel differential and transmitted via the power transmission shaft to the front wheel differential from which the divided power is transmitted to the front wheels 1.

A lower portion of a front wall of the transmission section 12 is provided with a front PTO shaft 37. The front PTO shaft 37 extends forward from the transmission section 12. A rear part of the transmission section 12 is provided with a rear PTO shaft 38. The rear PTO shaft 38 extends rearward from the transmission section 12. The motive power from the electric motor 29 is divided into two: motive power for traveling, which is to be varied by the continuously variable transmission 11 and transmitted to the front wheels 1 and the rear wheels 2; and motive power for working, which is to be transmitted to the front PTO shaft 37 and the rear PTO shaft 38.

The motive power of the front PTO shaft 37 is transmitted via the power transmission shaft (not shown) to the mower deck 24. With this motive power, the three rotary blades are driven. The motive power of the rear PTO shaft 38 is transmitted via the power transmission shaft (not shown) to the work device attached to the lifting link mechanism 14.

In this embodiment, below a bottom face of the battery 27 and between the pair of right and left front-rear frames, an air flow space 41 is formed for allowing air to flow therein. A length in a front-rear direction of the air flow space 41 is about the same as a length in the front-rear direction of the battery 27. When there is a space on at least one of right and left sides of the battery 27, lateral sides of the bottom part of the battery 27 is also used as the air flow space 41. The inverter 28 and the electric motor 29 for traveling are disposed in the air flow space 41 and held by the body 3. The electric motor 29 is rearward of the inverter 28. Below the inverter 28 and the electric motor 29, a lower cover 30 is provided. The lower cover 30 covers the inverter 28 and the electric motor 29 from below. The inverter 28 is configured to convert electric power of the battery 27 into electric power for driving the electric motor 29, by which electric power for driving, the electric motor 29 is rotated. The electric power for driving is power in which at least one of current, voltage and frequency is adjusted by the inverter 28 in order for the electric motor 29 to rotate at a target speed and with a target torque.

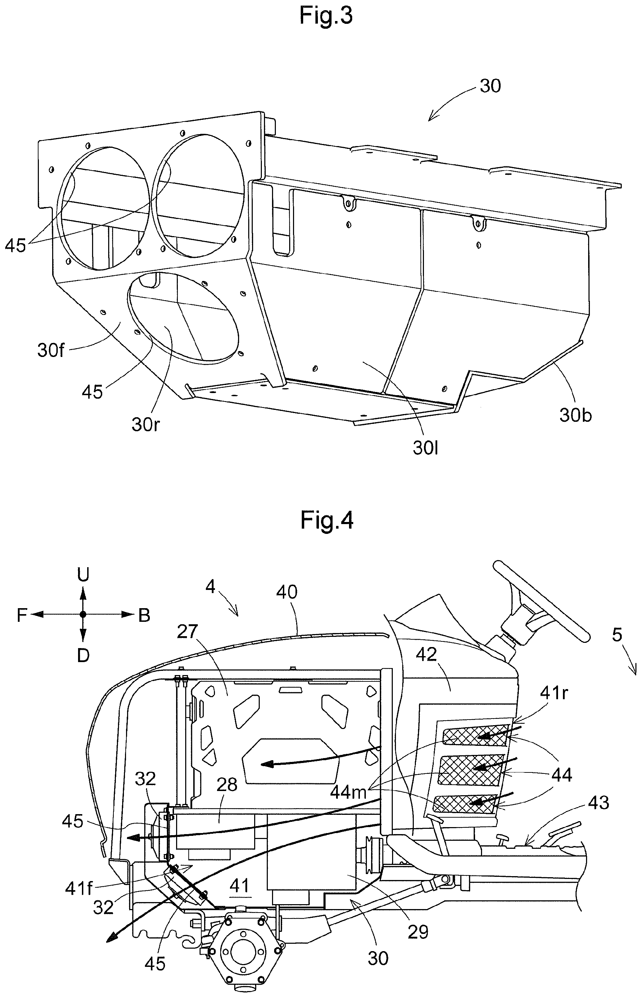

For providing the air flow space 41, the lower cover 30 shown in Fig. 3 is disposed in a bottom face region of the battery 27. The lower cover 30 has an upper face which is open and a bottom face which may be open. The lower cover 30 includes four walls: a front side wall 30f, a left side wall 301, a right side wall 30r, and a rear side wall 30b. Each of the side walls 30f, 301, 30r, 30b has an upper portion extending upward, an intermediate portion which is bent, and a lower portion extending downward and inward (toward a center portion of the lower cover 30 as seen in a plan view). In other words, an open area of the bottom face is smaller than an open area of the upper face. An upper portion of the front side wall 30f has two holes arranged side by side. A lower portion of the front side wall 30f has a single hole. Each hole has a circular cross section and serves as an air outlet 45 and as a hole for installing the cooling fan. In other words, in this embodiment, three cooling fans 32 are disposed in a front end region 41f. An upper portion of the rear side wall 30b is open as shown in Fig. 2, and allows the power transmission shaft to extend rearward from an output shaft of the electric motor 29.

As shown in Fig. 4, in a rear end region 41r of the air flow space 41, three air inlets 44 are arranged in a vertical direction. The front end region 41f of the air flow space 41 are provided with the air outlets 45. In this embodiment, the air flow space 41 includes not only a front end lower portion of the power section 4 but also an inside of the front panel 42. Therefore, among the faces of the front panel 42, a face facing the driver's seat 7 serves as a rear end face of the rear end region 41r of the air flow space 41. In addition, the front end lower portion of the power section 4 serves as the front end region 41f of the air flow space 41. Specifically, the air inlets 44 are provided in a portion of the front panel 42 corresponding to the rear end region 41r of the air flow space 41. The air outlets 45 are provided in a portion of the front side wall 30f of the lower cover 30 corresponding to the front end region 41f of the air flow space 41. The three air inlets 44 are above the floor panel 43. The air inlet 44 each have a grating 44m. The air outlets 45 each have a grating 45m.

The cooling fan 32 is configured to generate cooling air flow in the air flow space 41. The cooling fan 32 is adjacent to the air outlet 45. In this embodiment, the three holes in the front side wall 30f serve as the air outlets 45. The cooling fans 32 are attached to the respective three holes. As the cooling fan 32 rotates, external air as cooling air is allowed to enter the air inlet 44, pass the air flow space 41 and is discharged from the air outlet 45. With this cooling air flow, the inverter 28 and the electric motor 29 are cooled. At the same time, the battery 27 is cooled.

### Other embodiments

The present invention is not limited to the embodiment shown above. The following show other representative embodiments of the present invention.
(1) In the above-mentioned embodiment, the housing of the cooling fan 32 contains the fan motor 33 built therein. Instead, the fan motor 33 may be separately provided from the cooling fan 32, and the motive power from the fan motor 33 may be supplied to the cooling fan 32 with the use of a belt transmission mechanism or a gear transmission mechanism. In this case, it is also possible to adopt a configuration in which a single fan motor 33 provides motive power to a plurality of fan motors 33.
(2) In the above-mentioned embodiment, the battery 27 is described as a single battery. The present invention is not limited to this configuration, and the battery 27 may be divided into a plurality of battery units and arranged in the power section 4. In such a case, if two batteries 27 are arranged side by side, a space therebetween may be used as at least a part of the air flow space 41.
(3) The air outlet 45 may be configured to discharge air from a part other than the front end region 41f of the air flow space 41, for example, from a lower part or a lateral part of the air flow space 41.
(4) The grating 44m may cover a part of the air inlet 44 or the entirety of the air inlet 44.
(5) In the above-mentioned embodiment, the length in the front-rear direction of the air flow space 41 is about the same as the length in the front-rear direction of the battery 27. However, the length in the front-rear direction of the air flow space 41 may be greater than the length in the front-rear direction of the battery 27.

The features of the embodiments described above (including other embodiments, which also apply hereinafter) may be combined with a feature disclosed in another embodiment, provided that such a combination does not result in a contradiction. The embodiments described in the present specification are illustrative and should not be construed as limiting the present invention. Modifications to the present invention are permissible, as long as they do not deviate from the scope that can achieve the objects of the present invention.

### Industrial Applicability

The present invention is applicable to an electric work vehicle in which a cooling fan is used for cooling the devices associated with motive power.

## Claims

1. An electric work vehicle comprising:
a body (3) having a frame structure including a front part and a rear part, the front part providing for a power section (4), the rear part providing for a drive section (5);
a battery (27) in the power section (4);
an electric motor (29) for traveling configured to receive electric power from the battery (27); and
a cooling fan (32),
wherein the power section (4) has an air flow space (41) therein,
the air flow space (41) has a length in a front-rear direction greater than a length of the battery (27) in the front-rear direction, and includes a rear end region (41r) and a front end region (41f),
the rear end region (41r) of the air flow space (41) has an air inlet (44),
the front end region (41f) of the air flow space (41) has an air outlet (45),
the electric motor (29) for traveling is in the air flow space (41), and
the cooling fan (32) is adjacent to the air outlet (45).

2. The electric work vehicle according to claim 1, wherein the air inlet (44) faces the drive section (5).

3. The electric work vehicle according to claim 1 or 2,
further comprising a panel (42),
wherein a rear end of the rear end region (41r) is defined by the panel (42), and
the panel (42) has the air inlet (44).

4. The electric work vehicle according to claim 3, wherein the panel (42) is provided with a grating (44m) that covers at least a part of the air inlet (44).

5. The electric work vehicle according to claim 3 or 4,
further comprising a steering wheel (6),
wherein the panel (42) is forward of and below the steering wheel (6).

6. The electric work vehicle according to any one of claims 1 to 5,
further comprising a floor panel (43) provided for the drive section (5),
wherein the air inlet (44) is above the floor panel (43).

7. The electric work vehicle according to any one of claims 1 to 6, wherein the air outlet (45) is positioned lower than a position of the air inlet (44).

8. The electric work vehicle according to any one of claims 1 to 7, further comprising an inverter (28) disposed in the air flow space (41) and configured to receive electric power from the battery (27) and supply the electric power to the electric motor (29) for traveling.
